# EUROPÄISCHE PATENTSCHRIFT

(11) **EP 2 910 325 B1**
(45) Veröffentlichungstag und Bekanntmachung des Hinweises auf die Patenterteilung: **13.03.2019**
(21) Anmeldenummer: 15153634.9
(22) Anmeldetag: 03.02.2015
(51) Int. Cl.: B23B 29/20

(54) **Werkzeugrevolver**
Tool revolver
Tourelle revolver

(30) Priorität: 19.02.2014 DE 102014102082
(43) Veröffentlichungstag der Anmeldung: 26.08.2015
(73) Patentinhaber: Ott-Jakob Spanntechnik GmbH, 87663 Lengenwang (DE)
(72) Erfinder: Greif, Josef, 87496 Friesenried (DE); Rösch, Conrad, 87459 Pfronten (DE); Reisacher, Bartholomäus, 87435 Kempten (DE)
(74) Vertreter: Charrier Rapp & Liebau

(56) Entgegenhaltungen:
- EP-A1- 2 529 865
- DE-A1-102005 008 892
- DE-A1-102009 011 221
- DE-B3-102013 104 874

## Beschreibung

Die Erfindung betrifft einen Werkzeugrevolver nach dem Oberbegriff des Patentanspruchs 1.

Aus der DE 10 2009 011 221 A1 ist ein Werkzeugrevolver mit einem Revolverkörper und einer Spannvorrichtung zum Spannen einer Werkzeugaufnahme in einer Aufnahmeöffnung des Revolverkörpers bekannt. Die Spannvorrichtung enthält mehrere um eine Zugstange angeordnete Zangensegmente, die durch Verschiebung der Zugstange radial nach außen bewegbar sind. Die Verschiebung der Zugstange erfolgt über einen Spiralbolzen, der in einer quer zur Aufnahmeöffnung des Revolverköpers verlaufenden Bohrung angeordnet ist.

Aufgabe der Erfindung ist es, einen Werkzeugrevolver der eingangs genannten Art zu schaffen, der eine alternative Spannvorrichtung aufweist.

Diese Aufgabe wird durch einen Werkzeugrevolver mit den Merkmalen des Anspruchs 1 gelöst. Zweckmäßige Weiterbildungen und vorteilhafte Ausgestaltungen der Erfindung sind in den Unteransprüchen angegeben.

Bei dem erfindungsgemäßen Werkzeugrevolver weist die Spannvorrichtung zwei durch ein gemeinsames Betätigungselement quer zu einer Mittelachse der Aufnahmeöffnung gegeneinander verschiebbare Spannelemente auf, wobei das eine Spannelement in Form eines durch das Betätigungselement verschiebbaren Rings und das andere Spannelement in Form eines demgegenüber verschiebbaren Ringsegments ausgebildet ist. Durch das ringförmige Spannelement kann so ein Antrieb für die angetrieben Werkzeuge geführt werden. Die Spannvorrichtung kann auch besonders einfach montiert werden. Sie kann z.B. von oben in die Aufnahmeöffnungen der Revolverkörper eingesetzt und von außen montiert werden. Es sind keine aufwändigen Änderungen oder Anpassungen an dem Revolverkörper erforderlich.

In einer besonders zweckmäßigen Ausführung weisen die beiden Spannelemente diametral gegenüberliegende Spannklauen mit einer konischen oder schrägen unteren Spannfläche zur Anlage an einer dazu korrespondierenden konischen oder schrägen oberen Spannfläche der Werkzeugaufnahme auf. Dadurch kann die Werkzeugaufnahme beim Spannen gleichmäßig in die Aufnahmeöffnung des Revolverkörpers eingezogen werden.

Die beiden Spannelemente sind vorzugsweise derart ausgebildet, dass sie einen Spannzapfen der Werkzeugaufnahme von zwei Seiten umschließen.

Das erste Spannelement kann einen seitlich vorstehenden Führungszapfen enthalten, der in einer innerhalb einer Querbohrung des Revolverkörpers angeordneten Führungsbuchse verschiebbar geführt ist. Das zweite Spannelement kann über einen seitlich vorstehenden Führungszapfen in einer Durchgangsbohrung im Führungszapfen des ersten Spannelements verschiebbar geführt sein.

Zweckmäßigerweise kann das Betätigungselement als Stellschraube mit einem Gewindezapfen ausgebildet sein, der in eine mit einem Innengewinde versehene Durchgangsbohrung im Führungszapfen des ersten Spannelements eingreift. Das Betätigungselement ist vorzugsweise in einer Führungsbuchse in Axialrichtung begrenzt verschiebbar angeordnet.

Die Aufnahmeöffnung des Revolverkörpers kann eine Einheitskontur zur Aufnahme unterschiedlicher Werkzeugrevolveradapter aufweisen. In die Aufnahmeöffnung des Revolverkörpers kann eine Aufnahmebuchse eingesetzt sein. Dadurch kann der Werkzeugrevolver einfach an unterschiedliche Werkzeugaufnahmen angepasst werden.

Weitere Besonderheiten und Vorzüge der Erfindung ergeben sich aus der folgenden Beschreibung bevorzugter Ausführungsbeispiele anhand der Zeichnung. Es zeigen:
- **Figur 1**: einen Querschnitt durch einen Teil eines Werkzeugrevolvers mit einer Werkzeugaufnahme und einer Spannvorrichtung in einer Lösestellung;
- **Figur 2**: eine Schnittansicht entlang der Linie E-E von Figur 1;
- **Figur 3**: einen Querschnitt durch einen Teil des Werkzeugrevolver entsprechend Figur 1 mit der Werkzeugaufnahme und der Spannvorrichtung in einer Spannstellung;
- **Figur 4**: eine Schnittansicht entlang der Linie F-F von Figur 3;
- **Figur 5**: eine Draufsicht auf einen Teil des Werkzeugrevolvers von Figur 1 und
- **Figur 6**: eine vergrößerte Darstellung der Spannvorrichtung in dem Werkzeugrevolver von Figur 1.

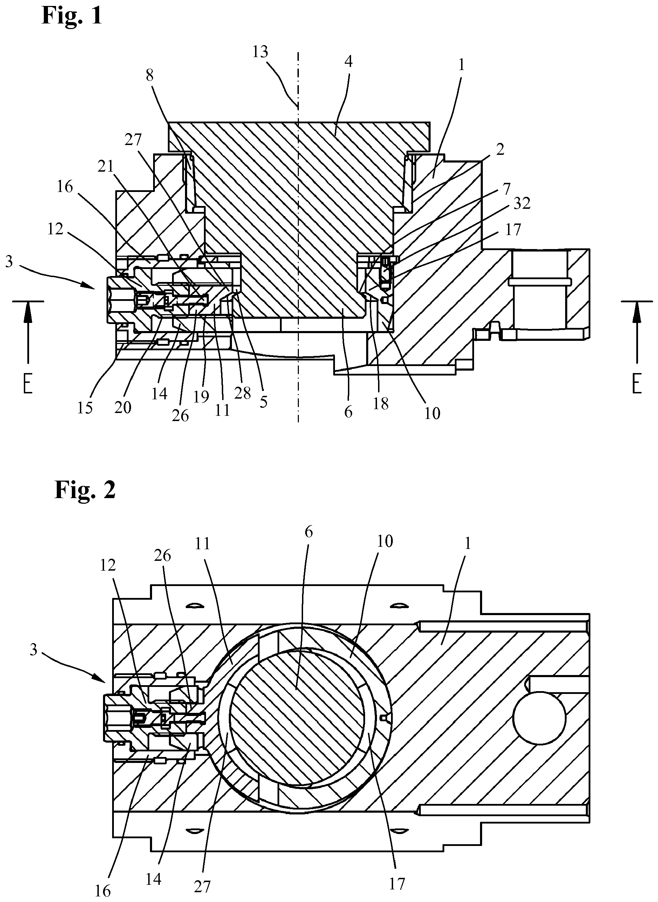

In den Figuren 1 und 2 ist ein Teil eines Revolverkörpers 1 eines Werkzeugrevolvers mit einer Aufnahmeöffnung 2 und einer im Revolverkörper 1 angeordneten Spannvorrichtung 3 zur lösbaren Halterung einer in der Aufnahmeöffnung 2 angeordneten Werkzeugaufnahme 4 in einem Querschnitt und einer geschnittenen Draufsicht gezeigt. Werkzeugrevolver weisen üblicherweise mehrere in dem Revolverkörper 1 angeordnete Aufnahmeöffnungen 2 zur Halterung mehrerer Werkzeugaufnahmen oder Werkzeuge auf.

Der Werkzeugrevolver kann z.B. als Sternrevolver mit einem scheibenförmigen Revolverkörper 1 und mehreren an dessen Außenumfang sternförmig verteilten Aufnahmeöffnungen 2 ausgebildet sein. Der Werkzeugrevolver kann aber auch als Scheibenrevolver mit an der Stirnseite eines Revolverkörpers angeordneten Aufnahmeöffnungen ausgeführt sein oder kann eine andere geeignete Form ausweisen. Bei dem gezeigten Ausführungsbeispiel ist der Werkzeugrevolver ein Sternrevolver, in dessen scheibenförmigen Revolverkörper 1 mehrere, mit einer speziell angepassten Einheitskontur versehene Aufnahmeöffnungen 2 zur Aufnahme unterschiedlicher Werkzeugaufnahmen 4 angeordnet sind.

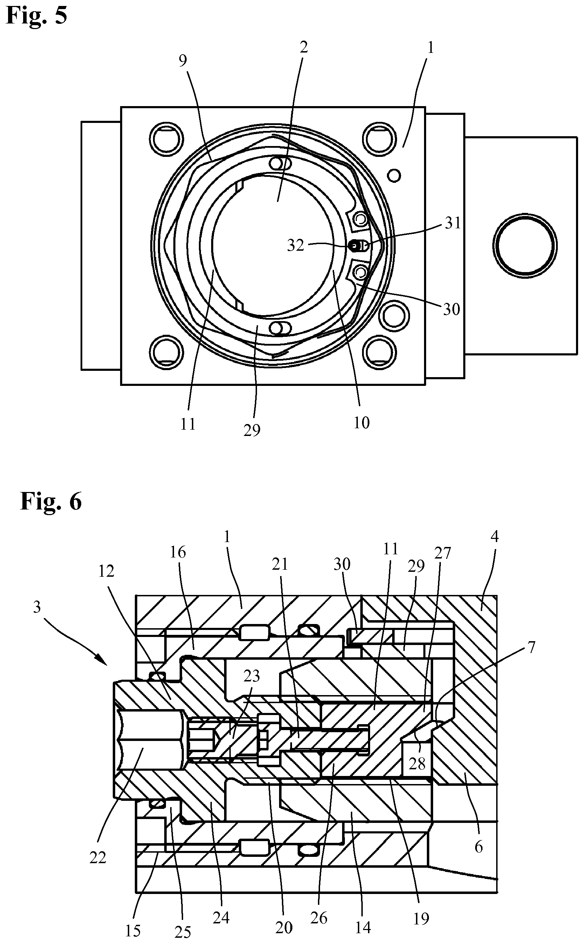

Die Aufnahmeöffnung 2 des Revolverkörpers 1 ist bei der gezeigten Ausführung mehrfach abgestuft und die Werkzeugaufnahme 4 weist einen in einen unteren Bereich 5 der Aufnahmeöffnung 2 ragenden unteren Spannzapfen 6 mit einer konischen oberen Spannfläche 7 auf. Der Spannzapfen 6 greift in den unteren Bereich 5 der Aufnahmeöffnung 2 mit einem radialen Abstand ein. In die Aufnahmeöffnung 2 des Revolverkörpers ist eine Aufnahmebuchse 8 eingesetzt, die eine hier als Hypotrochoid ausgebildet ist und eine in Figur 5 erkennbare Innenkontur 9 enthält. Selbstverständlich sind in die Aufnahmeöffnung 2 auch andere Aufnahmebuchsen mit anderen Innenkonturen für unterschiedlich gestaltete Werkzeugaufnahmen einsetzbar.

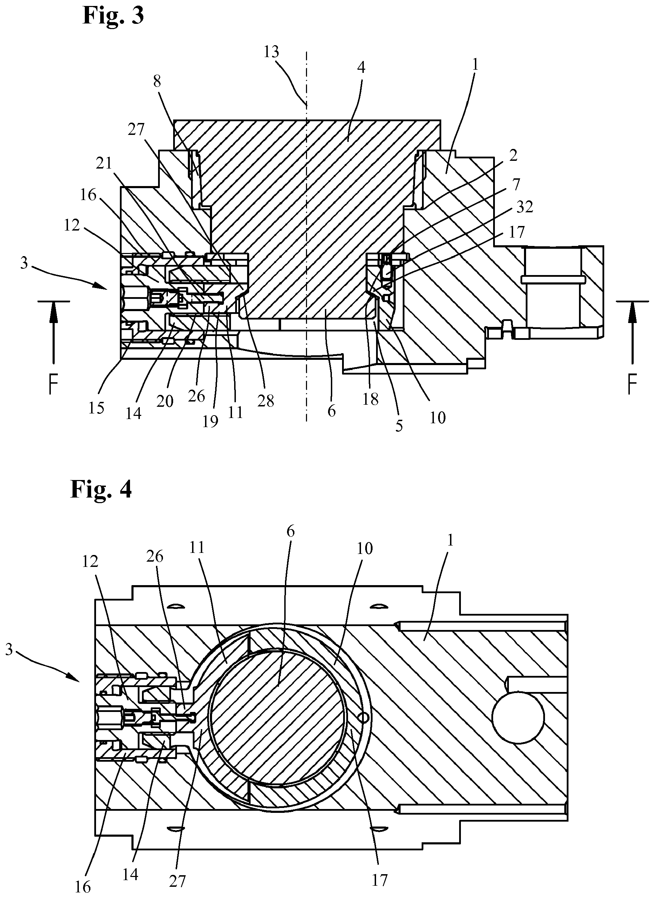

Die Spannvorrichtung 3 umfasst zwei gegeneinander verschiebbare Spannelemente 10 und 11, die durch ein gemeinsames Betätigungselement 12 in entgegen gesetzten Richtungen quer zu einer Mittelachse 13 der Aufnahmeöffnung 2 verschiebbar und zum beidseitigen Umgreifen des Spannzapfens 6 ausgebildet sind. Durch das hier als Gewindebolzen ausgebildete Betätigungselement 12 können die beiden an gegenüberliegenden Seiten des Spannzapfens 6 angreifenden Spannelemente 10 und 11 aus einer in den Figuren 1 und 2 gezeigten Lösestellung in Richtung der Mittelachse 13 aufeinander zu in eine in den Figuren 3 und 4 gezeigte Spannstellung verschoben bzw. aus dieser Spannstellung durch Auseinanderfahren der Spannelemente 10 und 11 wieder in die Lösestellung bewegt werden.

Das erste Spannelement 10 ist in Form eines im inneren Teil 5 der Aufnahmeöffnung 2 angeordneten und quer zur Mittelachse 13 der Aufnahmeöffnung 2 verschiebbaren Rings mit einem seitlich vorstehenden Führungszapfen 14 ausgeführt. Der Führungszapfen 14 des ringförmigen Spannelements 10 ist in einer innerhalb einer Querbohrung 15 des Revolverkörpers 1 angeordneten Führungsbuchse 16 verschiebbar geführt. Das ringförmige Spannelement 10 weist an einer dem Führungszapfen 14 diametral gegenüberliegenden Seite eine nach innen vorstehende Spannklaue 17 mit einer unteren Spannfläche 18 zur Anlage an der konischen Spannfläche 7 am Spannzapfen 6 der Werkzeugaufnahme 4 auf.

Wie besonders aus Figur 6 hervorgeht, enthält der Führungszapfen 14 des ringförmigen Spannelements 10 eine mit einem Innengewinde versehene Durchgangsbohrung 19, in die ein Gewindezapfen 20 des als Stellschraube ausgebildeten Betätigungselements 12 eingreift. An dem Gewindezapfen 20 des Betätigungselements 12 ist das zweite Spannelement 11 über eine Schraube 21 so befestigt, dass sich das Betätigungselement 12 gegenüber dem Spannelement 11 drehen kann, das Spannelement 11 aber axial gesichert ist und bei einer Axialbewegung des Betätigungselements 12 durch dieses mitgenommen wird. In dem als Stellschraube mit einem Innensechskant 22 ausgebildeten Betätigungselement 12 ist eine Stiftschraube 23 zur Sicherung der Schraube 21 angeordnet. Das Betätigungselement 12 hat einen Ringbund 24, über den das Betätigungselement 12 zusammen mit dem Führungszapfen 14 des ersten Spannelements 10 verschiebbar in der Führungsbuchse 16 geführt ist. Die Führungsbuchse 16 weist an ihrem äußeren Ende eine Ringschulter 25 auf, an welcher der Ringbund 24 des Betätigungselements 12 in der in Figur 6 gezeigten Lösestellung zur Anlage gelangt.

Das zweite Spannelement 11 ist in Form eines Ringsegments ausgebildet und weist ebenfalls einen seitlich vorstehenden Führungszapfen 26 auf. Über den Führungszapfen 26 ist das Spannelement 11 in der Durchgangsbohrung 19 im Führungszapfen 14 des ersten Spannelements 10 verschiebbar geführt. Auch an dem zweiten Spannelement 11 ist eine nach innen vorstehende Spannklaue 27 mit einer unteren Spannfläche 28 zur Anlage an der konischen Spannfläche 7 am Spannzapfen 6 der Werkzeugaufnahme 4 vorgesehen. Das ringförmige erste Spannelement 10 ist in der Aufnahmeöffnung 2 des Revolverkörpers 1 durch eine auch in Figur 5 erkennbare Deckscheibe 29 und einen Federring 30 gesichert. In dem ersten Spannelement 10 können auch in Figur 1 erkennbare und durch Langlöcher 31 in der Deckscheibe 29 ragenden Ausstoßstifte 32 zum Ausstoßen der Werkzeugaufnahme 4 bei der Verschiebung der Spannelemente 10 und 11 in die Lösestellung angeordnet sein.

Wie aus den Figuren 2 und 4 ersichtlich ist, sind die beiden Spannelemente 10 und 11 derart ausgebildet, dass sie den Spannzapfen 4 der Werkzeugaufnahme 4 von beiden Seiten umschließen. Die beiden diametral gegenüberliegenden Spannklauen 17 und 17 sind als Ringsegmente mit einem Winkel von 60° ausgeführt. Dadurch ist eine gute Spann- und Einzugskraft erreichbar.

Durch Drehung des als Stellschraube ausgebildeten Betätigungselements 12 werden die Spannelemente 10 und 11 zwischen der in den Figuren 1 und 2 gezeigten Lösestellung und der in den Figuren 3 und 4 gezeigten Spannstellung verschoben. Wird z.B. das Betätigungselement 12 in der Lösestellung von Figur 1 und 2 nach rechts gedreht, werden die beiden Spannelemente 10 und 11 über den Gewindezapfen 20 zusammengefahren und gegen den Spannzapfen 6 der Werkzeugaufnahme 4 gezogen. In der Spannstellung weisen die beiden Spannelemente 10 und 11 keine Abstützung an dem Revolverkörper 1 auf, wodurch die Entstehung von Kippmomenten vermieden werden kann. Durch entgegen gesetzte Drehung des Betätigungselements 12 können die beiden Spannelemente 10 und 11 wieder auseinander gefahren und in die Lösestellung der Figuren 1 und 2 bewegt werden.

## Patentansprüche

1. Werkzeugrevolver mit einem Revolverkörper (1) und einer Spannvorrichtung (3) zur Spannen einer Werkzeugaufnahme (6) in einer Aufnahmeöffnung (2) des Revolverkörpers (1), wobei die Spannvorrichtung (3) zwei durch ein gemeinsames Betätigungselement (12) quer zu einer Mittelachse (13) der Aufnahmeöffnung (2) gegeneinander verschiebbare Spannelemente (10, 11) umfasst, **dadurch gekennzeichnet, dass** ein erstes Spannelement (10) in Form eines Rings und ein zweites Spannelement (11) in Form eines demgegenüber verschiebbaren Ringsegments ausgebildet ist.

2. Werkzeugrevolver nach Anspruch 1, **dadurch gekennzeichnet, dass** die beiden Spannelemente (10, 11) diametral gegenüberliegende Spannklauen (17, 27) mit einer unteren Spannfläche (18, 28) zur Anlage an einer oberen Spannfläche (7) der Werkzeugaufnahme (4) aufweisen.

3. Werkzeugrevolver nach Anspruch 1 oder 2, **dadurch gekennzeichnet, dass** die beiden Spannelemente (10, 11) derart ausgebildet sind, dass sie einen Spannzapfen (6) der Werkzeugaufnahme (4) von zwei Seiten umschließen.

4. Werkzeugrevolver nach einem der Ansprüche 1 bis 3, **dadurch gekennzeichnet, dass** das erste Spannelement (10) einen seitlich vorstehenden Führungszapfen (14) enthält, der in einer innerhalb einer Querbohrung (15) des Revolverkörpers (1) angeordneten Führungsbuchse (16) verschiebbar geführt ist.

5. Werkzeugrevolver nach Anspruch 4, **dadurch gekennzeichnet, dass** der Führungszapfen (14) des ersten Spannelements (10) eine mit einem Innengewinde versehene Durchgangsbohrung (19) enthält, in die ein Gewindezapfen (20) des als Stellschraube ausgebildeten Betätigungselements (12) eingreift.

6. Werkzeugrevolver nach einem der Ansprüche 1 bis 5, **dadurch gekennzeichnet, dass** das erste Spannelement (10) durch einen Sicherungsring (30) gesichert in der Aufnahmeöffnung (2) des Revolverkörpers (1) angeordnet ist.

7. Werkzeugrevolver nach einem der Ansprüche 1 bis 6, **dadurch gekennzeichnet, dass** zweite Spannelement (11) einen seitlich vorstehenden Führungszapfen (26) enthält, über den das zweite Spannelement (11) in einer Durchgangsbohrung (19) im Führungszapfen (14) des ersten Spannelements (10) verschiebbar geführt ist.

8. Werkzeugrevolver nach einem der Ansprüche 1 bis 7, **dadurch gekennzeichnet, dass** das Betätigungselement (12) in einer Führungsbuchse (16) in Axialrichtung begrenzt verschiebbar angeordnet ist.

9. Werkzeugrevolver nach einem der Ansprüche 1 bis 8, **dadurch gekennzeichnet, dass** in die Aufnahmeöffnung (2) des Revolverkörpers (1) eine Aufnahmebuchse (8) eingesetzt ist.

## Claims

1. Tool revolver having a revolver body (1) and a clamping device (3) for clamping a tool receiver (6) in a receiving opening (2) of the revolver body (1), wherein the clamping device (3) comprises two clamping elements (10, 11) which are displaceable with respect to one another by a common actuating element (12) transversely to a central axis (13) of the receiving opening (2), **characterised in that** a first clamping element (10) is designed in the form of a ring and a second clamping element (11) is designed in the form of a ring segment which is displaceable with respect to the ring.

2. Tool revolver according to claim 1, **characterised in that** the two clamping elements (10, 11) have diametrally opposite clamping claws (17, 27) with a lower clamping surface (18, 28) for resting on an upper clamping surface (7) of the tool receiver (4).

3. Tool revolver according to claim 1 or 2, **characterised in that** the two clamping elements (10, 11) are designed such that they enclose a clamping pin (6) of the tool receiver (4) from two sides.

4. Tool revolver according to one of claims 1 to 3, **characterised in that** the first clamping element (10) contains a laterally projecting guide pin (14) which is guided to be displaceable in a guide bushing (16) arranged within a transverse bore (15) of the revolver body (1).

5. Tool revolver according to claim 4, **characterised in that** the guide pin (14) of the first clamping element (10) contains a passage bore (19) provided with an internal thread and into which a threaded pin (20) of the actuating element (12) designed as an adjusting screw engages.

6. Tool revolver according to one of claims 1 to 5, **characterised in that** the first clamping element (10) is arranged in the receiving opening (2) of the revolver body (1) secured by a securing ring (30).

7. Tool revolver according to one of claims 1 to 6, **characterised in that** second clamping element (11) contains a laterally projecting guide pin (26), via which the second clamping element (11) is guided to be displaceable in a passage bore (19) in the guide pin (14) of the first clamping element (10).

8. Tool revolver according to one of claims 1 to 7, **characterised in that** the actuating element (12) is arranged to be displaceable in a guide bushing (16) limited in axial direction.

9. Tool turret according to one of claims 1 to 8, **characterised in that** a receiving bushing (8) is inserted into the receiving opening (2) of the revolver body (1).

## Revendications

1. Tourelle revolver avec un corps revolver (1) et un dispositif de serrage (3) pour le serrage d'un logement d'outil (6) dans une ouverture de réception (2) du corps revolver (1), dans laquelle le dispositif de serrage (3) comporte deux éléments de serrage (10, 11) mobiles l'un contre l'autre par un élément d'actionnement (12) commun transversalement à un axe médian (13) de l'ouverture de réception (2), **caractérisée en ce qu'**un premier élément de serrage (10) est réalisé sous la forme d'un anneau et un second élément de serrage (11) est réalisé sous la forme d'un segment annulaire mobile par rapport à celui-ci.

2. Tourelle revolver selon la revendication 1, **caractérisée en ce que** les deux éléments de serrage (10, 11) présentent des pinces de serrage (17, 27) opposées diamétralement avec une surface de serrage inférieure (18, 28) pour l'appui contre une surface de serrage supérieure (7) du logement d'outil (4).

3. Tourelle revolver selon la revendication 1 ou 2, **caractérisée en ce que** les deux éléments de serrage (10, 11) sont réalisés de telle manière qu'ils entourent un tenon de serrage (6) du logement d'outil (4) de deux côtés.

4. Tourelle revolver selon l'une quelconque des revendications 1 à 3, **caractérisée en ce que** le premier élément de serrage (10) contient un tenon de guidage (14) dépassant latéralement, qui est guidé de manière mobile dans une douille de guidage (16) agencée dans un perçage transversal (15) du corps revolver (1).

5. Tourelle revolver selon la revendication 4, **caractérisée en ce que** le tenon de guidage (14) du premier élément de serrage (10) contient un perçage débouchant (19) pourvu d'un filet intérieur, dans lequel un tenon fileté (20) de l'élément d'actionnement (12) réalisé en tant que vis de réglage vient en prise.

6. Tourelle revolver selon l'une quelconque des revendications 1 à 5, **caractérisée en ce que** le premier élément de serrage (10) est agencé fixé par un circlip (30) dans l'ouverture de réception (2) du corps revolver (1).

7. Tourelle revolver selon l'une quelconque des revendications 1 à 6, **caractérisée en ce que** le second élément de serrage (11) contient un tenon de guidage (26) dépassant latéralement, par lequel le second élément de serrage (11) est guidé de manière mobile dans un perçage débouchant (19) dans le tenon de guidage (14) du premier élément de serrage (10).

8. Tourelle revolver selon l'une quelconque des revendications 1 à 7, **caractérisée en ce que** l'élément d'actionnement (12) est agencé de manière mobile en étant limité dans le sens axial dans une douille de guidage (16).

9. Tourelle revolver selon l'une quelconque des revendications 1 à 8, **caractérisée en ce qu'**une douille de réception (8) est insérée dans l'ouverture de réception (2) du corps revolver (1).
